# EUROPEAN PATENT SPECIFICATION

(11) **EP 0 431 859 B1**
(45) Date of publication and mention of the grant of the patent: **30.08.1995**
(21) Application number: 90313082.1
(22) Date of filing: 03.12.1990
(51) Int. Cl.: G11B 27/36

(54) **Disc evaluating apparatus**
Plattenprüfungsgerät
Appareil d'évaluation de disques

(30) Priority: 06.12.1989 JP 315370/89
(43) Date of publication of application: 12.06.1991
(73) Proprietor: SONY CORPORATION, Tokyo 141 (JP)
(72) Inventor: Henmi, Fumiaki, Shinagawa-ku Tokyo (JP); Ohashi, Tomio, Shinagawa-ku Tokyo (JP)
(74) Representative: Ayers, Martyn Lewis Stanley

(56) References cited:
- EP-A- 0 309 639
- 72ND CONVENTION OF THE AUDIO ENGINEERING SOCIETY 23 October 1982, ANAHEIM,CALIFORNIA pages 1 - 7; T.OTSUKI ET AL: 'ON COMPACT DISC TAPE SYSTEMS'

## Description

The present invention relates to a disc evaluating apparatus capable of comparatively evaluating an original signal on a master tape and a signal recorded on a disc member.

In manufacture of optical video discs, audio discs or the like, it is generally customary to first produce a master tape (cutting master tape, hereinafter referred to as CM tape) where a video signal or an audio signal as a signal source is recorded by the use of a video or audio tape recorder. A mother disc for production of a stamper is cut using the CM tape thus obtained.

Now a process of manufacturing an exemplary optical disc will be schematically described below. A video signal or an audio signal reproduced by playing back a CM tape is modulated in a predetermined manner by a modulating means in conformity with a disc format adapted for disc recording. The video or audio signal thus modulated is supplied to a cutting machine, and recording laser light in the cutting machine is modulated by such signal through an AO modulator or the like. Subsequently the modulated laser light is irradiated to a photoresist deposited on a glass mother, so that the video or audio signal is recorded optically on the photoresist. Then the photoresist is developed after completion of such optical recording, whereby the portions of the glass mother exposed to the recording laser light are dissolved and removed to consequently form pits which represent the content of the CM tape. The glass mother thus pitted correspondingly to the content of the CM tape is coated with electrodes so as to be prepared for an electroforming step. In this stage of the process, the light reflectivity becomes substantially equal to that of a final-product disc such as an optical disc, so that an inspection is rendered possible to check if the signal has been properly recorded or any defect is existent in any of the anterior steps. The glass mother inspected and determined to be satisfactory is then delivered to the next electroforming step, where the glass mother is electroformed to thereby produce a stamper at a predetermined thickness. The stamper thus obtained is set in an injection molding machine for example to produce a transparent disc base, and a reflecting film of aluminum or the like is formed by sputtering or evaporation on the pitted side of the disc base. And further a protective film is formed thereon by spin coating or the like so as to protect the reflecting film, thereby completing the manufacture of a desired optical disc.

In such disc manufacturing process, the reproduced signal is monitored and compared for the purpose of quality control in each of the signal recording stages on the mother disc, stamper and final-product disc, and a check is made to find whether any defect is existent in the video and audio signals, or to detect the stage with regard to occurrence of such defect. For example, in case the CM tape is defective from the beginning, it naturally follows that even if the entire steps relative to manufacture of the disc are complete, the disc members (inclusive of mother disc, stamper and final-product disc) are rendered also defective. Therefore the reproduced signal is individually monitored and compared between the CM tape and each disc member.

It has been customary heretofore that the comparative evaluation of the CM tape and the disc member mentioned above is performed by an inspector previously taking notes of the content, portion and so forth of any defect found during each step of the disc manufacturing process or in a test of an optical disc product, and subsequently playing back the CM tape to detect the defective position, and then checking if the defect noted previously is existent or not on the CM tape also.

However, the image of the defect found on the mother disc, the stamper or the final-product disc is dependent merely upon the impression of the inspector, and such impression fades away with the lapse of time, so that the decision on the defect is prone to be obscure in the method mentioned. Furthermore, in accordance with a numerical increase of defects, the decision on each of the defects becomes more obscure, and the operation for comparison is rendered extremely complicated.

Due to such circumstances, it is difficult by the conventional method to achieve exact and accurate comparative evaluation of a CM tape and a mother disc, a stamper or a final-product disc (hereinafter referred to as a disc member), and a high efficiency fails to be attained in the operation.

EP-A-0.309.639 discloses an apparatus for evaluating a disc made from a master tape by playing back the disc and the tape after each other and storing the played back sampled signals for later comparison.

It is therefore an object of the present invention to provide an improved disc evaluating apparatus which is capable of performing satisfactory comparative evaluation of a CM tape and a disc member (mother disc, stamper or final-product disc) with enhanced facility and accuracy.

For the purpose of attaining the object mentioned, the apparatus of the present invention comprises a tape playback means a disc playback means, a reference clock generating means, a sync signal generating means, and a system control means for controlling the operations of the two playback means. A common sync signal is supplied to both the tape playback means and the disc playback means, which are thereby placed under system control similarly to each other, whereby the signals on the CM tape and the disc member can be reproduced in a completely synchronised state.

According to one aspect of the present invention, there is provided a disc evaluating apparatus in use of which a master tape and a disc member intended to have the same content signals recorded thereon are played back, and the recorded information on said disc member is compared with that on said master tape, said apparatus comprising:
a master tape playback means for playing back said master tape where an original signal to be used in a disc cutting step is recorded;
a disc playback means for playing back said disc member;
a sync signal generating means for producing a reference sync signal from a reference clock signal and supplying the sync signal to both of said master tape playback means and said disc playback means; and
a control means for simultaneously controlling the operations of said master tape playback means and said disc playback means to play back said master tape and said disc member synchronously with each other.

According to another aspect of the present invention, there is provided a disc evaluating method comprising the steps of:
controlling the operations of a master tape playback means and a disc playback means synchronously with each other in conformity with time information reproduced from both a master tape and a disc member having the same content signals recorded thereon; and simultaneously comparing the information on said disc member with the information on said master tape.

The invention will be further described by way of non-limitative example with reference to the accompanying drawings, in which:-

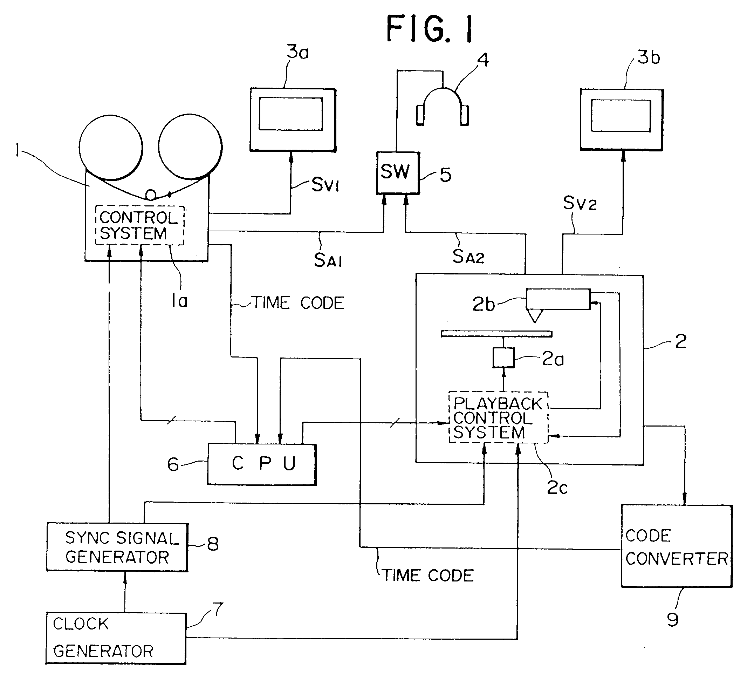

The sole figure is a block diagram of an exemplary disc evaluating apparatus embodying the present invention.

Hereinafter a preferred embodiment of an apparatus for evaluating a mother video disc will be described in detail with reference to the accompanying drawing. It is a matter of course that the evaluating apparatus of the present invention for comparison with a CM tape is applicable not merely to a mother disc alone but also to a stamper or a final-product disc as well.

The sole figure is a block diagram of such preferred embodiment of the present invention.

In this diagram, there are included a tape playback unit such as a video tape recorder (hereinafter referred to as a tape player) 1 capable of playing back a CM tape, and a mother disc player 2 capable of playing back a mother disc where a signal has been recorded by a cutting machine.

The mother disc player 2 is constituted similarly to an ordinary optical disc player and comprises a driving means 2a for rotating a mother disc, an optical head device 2b for playing back the mother disc rotated by the driving means 2a, and a playback control system 2c for controlling both the driving means 2a and the optical head device 2b and processing the output signal of the optical head device 2b to obtain a desired playback signal.

Also shown are a monitor 3a for displaying on its screen a video signal SV1 reproduced and outputted from the tape player 1; a monitor 3b for displaying on its screen a video signal SV2 reproduced and outputted from the mother disc player 2; and a headphone 4 for outputting via a switch circuit 5 either a stereo audio signal SA1 or SA2 supplied from the tape player 1 or the mother disc player 2. The constitution may be so modified that both audio signals SA1 and SA2 are outputted simultaneously from left and right. And a loudspeaker may be employed in place of a headphone for monitoring.

Reference numeral 6 denotes a system control unit (CPU) for simultaneously controlling the operations of the tape player 1 and the mother disc player 2 and supplying a common control signal to playback constrol systems provided for the tape player 1 and the mother disc player 2 respectively. Further shown is a clock generator 7 for supplying a reference clock signal to both a sync signal generator 8 and the mother disc player 2. The sync signal generator 8 produces a sync signal from the reference playback control systems 1a and 2a for the tape player 1 and the mother disc player 2.

Denoted by 9 is a code converter for reading out, in a mother disc playback mode, time information inclusive of a frame number code and a program time code added as a special code (normally composed of 24 bits) within the vertical blanking interval in the recorded video signal on the video disc, and converting such special code into the same format as that of the time code added to the CM tape. The time code thus converted and outputted from the code converter 9 is supplied to the CPU 6 together with the time code reproduced from the CM tape by the tape player 1.

In the disc evaluating apparatus of the constitution mentioned above, the CM tape and the mother disc to be comparatively evaluated can be played back in exact synchronism with each other.

More specifically, the CPU 6 executes common playback control of the tape player 1 and the mother disc player 2, so that the operations of the tape player 1 and the mother disc player 2 are performed in a synchronized state where the respective time bases are rendered completely coincident with each other by the sync signal supplied in common thereto from the sync signal generator 8. Consequently the synchronized playback signals are compared with each other through the monitors 3a, 3b (or the headphone 4 with regard to the audio signal), whereby the video and audio signals from the CM tape and the mother disc can be mutually compared with facility and certainty.

Since the respective time codes from the tape player 1 and the code converter 9 are inputted to the CPU 6, the access operation can also be controlled in a similar manner. Therefore, in case it is desired that merely the defective portion detected on the mother disc be synchronously played back from both the mother disc and the CM tape, the access operations in the tape player 1 and the mother disc player 2 are controlled in conformity with the respective time codes, so that the mother disc and the CM tape can be played back from the same position.

It is a matter of course that any of other operation modes such as pause, fast playback, slow playback and so forth can also be executed synchronously by the common control of the CPU 6.

However, the access operation in the mother disc player 2 is naturally faster. Therefore, the mother disc player 2 is kept at a halt until arrival of the CM tape at the access position in the tape player 1, and upon mutual coincidence of the time codes, playback of the mother disc and that of the CM tape are started simultaneously.

In the disc evaluating apparatus of the above embodiment, if data indicative of desired playback portions are inputted to the CPU 6, such portions alone can be automatically and successively played back in synchronism for comparative evaluation.

For example, defective portions on the mother disc are previously inspected, and data (positional information) representative of such defective portions are inputted to the CPU 6. Then, in comparing the mother disc with the CM tape, merely the defective portions alone are successively cued and played back to consequently enhance the operational efficiency in the comparison.

The embodiment mentioned above is concerned with an exemplary case of comparing a mother disc with a CM tape. However, it may be needless to say that comparative evaluation of a stamper, a final-product disc or the like with a CM tape can also be achieved merely by replacing the mother disc player 2 with an ordinary optical disc player for example.

The tape player 1 may be a separate unit as well. For example, in the case of employing an ordinary CM tape player, the requirement is that it is synchronizable with an external sync signal and is so settable as to be placed under system control of the CPU 6 in response to a remote control input. The present invention is applicable to a digital audio disc as well without being limited to a video disc alone. In this case, a digital tape recorder or the like is employed as the aforementioned tape player to perform comparative evaluation of a disc member such as a mother disc, a stamper or a final-product disc.

According to the disc evaluating apparatus of the present invention, as described hereinabove, a CM tape and a disc member can be played back in complete synchronism with each other, whereby a variety of advantageous effects are attainable including that comparative evaluation as to whether any defective portion found on the disc member is existent also on the CM tape, and comparative evaluation relative to the image quality, sound quality and so forth in both the disc member and the CM tape, can be performed with remarkably high accuracy in a short period of time.

## Claims

1. A disc evaluating apparatus in use of which a master tape and a disc member intended to have the same content signals recorded thereon are played back, and the recorded information on said disc member is compared with that on said master tape, said apparatus comprising:
a master tape playback means (1) for playing back said master tape where an original signal to be used in a disc cutting step is recorded;
a disc playback means (2) for playing back said disc member;
a sync signal generating means (8) for producing a reference sync signal from a reference clock signal and supplying the sync signal to both of said master tape playback means (1) and said disc playback means (2); and
a control means (6) for simultaneously controlling the operations of said master tape playback means (1) and said disc playback means (2) to play back said master tape and said disc member synchronously with each other.

2. A disc evaluating apparatus according to claim 1, further including a code converter means (9) for converting time information obtained from said disc playback means into the same code format as that of time information on said master tape, wherein the output signal of said code converter means is supplied to said control means.

3. A disc evaluating apparatus according to claim 2, further including a monitor means (3a, 3b) for monitoring the information reproduced by said master tape playback means (1) and said disc playback means (2).

4. A disc evaluating apparatus according to claim 3, wherein said monitor means (3a, 3b) comprises a first monitor means (3a) for monitoring the information reproduced by said master tape playback means (1), and a second monitor means (3b) for monitoring the information reproduced by said disc playback means (2).

5. A disc evaluating apparatus according to any one of the preceding clams, wherein said disc member is any one of a glass mother disc obtained after development, a stamper and a final-product disc.

6. A disc evaluating method comprising the steps of:
controlling the operations of a master tape playback means (1) and a disc playback means (2) synchronously with each other in conformity with time information reproduced from both a master tape and a disc member having the same content signals recorded thereon; and simultaneously comparing the information on said disc member with the information on said master tape.

7. A disc evaluating method according to claim 6, wherein time information recorded on said disc member and reproduced therefrom by said disc playback means (2) is converted into the same code format as that of time information recorded on said master tape, so that the operations of said master tape playback means (1) and said disc playback means (2) are controlled to be synchronised with each other.

## Patentansprüche

1. Plattenprüfungsgerät, bei dessen Benutzung ein Mutterband und eine Platte, welche die gleichen Signalinhalte haben sollen, die auf diesen aufgezeichnet sind, abgespielt werden und die aufgezeichnete Information auf der Platte mit derjenigen auf dem Mutterband verglichen wird, welches Gerät umfaßt:
ein Mutterband-Abspielmittel (1) zum Abspielen des Mutterbandes, auf dem ein Ursprungssignal, das in einem Plattenschnitt-Schritt zu benutzen ist, aufgezeichnet ist,
ein Platten-Abspielmittel (2) zum Abspielen der Platte,
ein Synchronisierungssignal-Erzeugungsmittel (8) zum Erzeugen eines Referenz-Synchronisierungssignals aus einem Referenz-Taktsignal und Ausgeben des Synchronisierungssignals sowohl an das Mutterband-Abspielmittel (1) als auch an das Platten-Abspielmittel (2) und
ein Steuermittel (6) zum gleichzeitigen Steuern der Betriebsvorgänge des Mutterband-Abspielmittels (1) und des Platten-Abspielmittels (2), um das Mutterband und die Platte synchron miteinander abzuspielen.

2. Plattenprüfungsgerät nach Anspruch 1, das ferner ein Code-Umsetzmittel (9) zum Umsetzen einer Zeitinformation, die von dem Platten-Abspielmittel gewonnen ist, in dasselbe Code-Format wie dasjenige der Zeitinformation auf dem Mutterband enthält, wobei das Ausgangssignal des Code-Umsetzmittels dem Steuermittel zugeführt wird.

3. Plattenprüfungsgerät nach Anspruch 2, das ferner ein Überwachungsmittel (3a, 3b) zum Überwachen der Information enthält, die durch das Mutterband-Abspielmittel (1) und das Platten-Abspielmittel (2) wiedergegeben ist.

4. Plattenprüfungsgerät nach Anspruch 3, bei dem das Überwachungsmittel (3a, 3b) ein erstes Überwachungsmittel (3a) zum Überwachen der Information, die durch das Mutterband-Abspielmittel (1) wiedergegeben wird, und ein zweites Überwachungsmittel (3b) zum Überwachen der Information, die durch das Platten-Abspielmittel (2) wiedergegeben wird, umfaßt.

5. Plattenprüfungsgerät nach einem der vorhergehenden Ansprüche, bei dem die Platte eine Glas-Mutterplatte, die nach einem Entwicklungsprozeß gewonnen ist, eine Matrize oder eine Platte als Endprodukt sein kann.

6. Plattenprüfungsverfahren, das Schritte umfaßt zum
Steuern der Betriebsvorgänge eines Mutterband-Abspielmittels (1) und eines Platten-Abspielmittels (2) in einem Synchronbetrieb oder in Übereinstimmung mit einer Zeitinformation, die sowohl von einem Mutterband als auch von einer Platte wiedergegeben wird, welche dieselben Signalinhalte haben, die auf ihnen aufgezeichnet sind, und
gleichzeitigen Vergleichen der Information auf der Platte mit der Information auf dem Mutterband.

7. Plattenprüfungsverfahren nach Anspruch 6, bei dem Zeitinformation, die auf der Platte aufgezeichnet ist und von dieser durch das Platten-Abspielmittel (2) wiedergegeben wird, in dasselbe Code-Format wie dasjenige der Zeitinformation umgesetzt wird, die auf dem Mutterband aufgezeichnet ist, so daß die Betriebsvorgänge des Mutterband-Abspielmittels (1) und des Platten-Abspielmittels (2) derart gesteuert werden, daß sie miteinander synchronisiert sind.

## Revendications

1. Appareil d'évaluation de disques en utilisation duquel une bande maîtresse et un disque devant avoir les mêmes signaux enregistrés sur ceux-ci sont reproduits, et l'information enregistrée sur ledit disque est comparée à celle sur ladite bande maîtresse, ledit appareil comportant :
un moyen de reproduction de bande maîtresse (1) pour reproduire ladite bande maîtresse sur laquelle un signal original devant être utilisé au cours d'une étape de gravure de disque est enregistré ;
un moyen de reproduction de disque (2) pour reproduire ledit disque ;
un moyen de génération de signal de synchronisation (8) pour produire un signal de synchronisation de référence à partir d'un signal d'horloge de référence et délivrer le signal de synchronisation à la fois audit moyen de reproduction de la bande maîtresse (1) et audit moyen de reproduction du disque (2) ; et
un moyen de commande (6) pour commander simultanément les opérations dudit moyen de reproduction de bande maîtresse (1) et dudit moyen de reproduction du disque (2) pour reproduire ladite bande maîtresse et ledit disque de façon synchrone.

2. Appareil d'évaluation de disques selon la revendication 1, comprenant en outre un moyen de conversion de code (9) pour convertir une information temporelle obtenue dudit moyen de reproduction de disque au même format de code que celui de l'information temporelle sur ladite bande maîtresse, dans lequel le signal de sortie dudit moyen de conversion de code est appliqué audit moyen de commande.

3. Appareil d'évaluation de disques selon la revendication 2, comprenant en outre un moyen de contrôle (3a, 3b) pour contrôler l'information reproduite par ledit moyen de reproduction de bande maîtresse (1) et ledit moyen de reproduction de disque (2).

4. Appareil d'évaluation de disques selon la revendication 3, dans lequel ledit moyen de contrôle (3a, 3b) comporte un premier moyen de contrôle (3a) pour contrôler l'information reproduite par ledit moyen de reproduction de bande maîtresse (1) et un second moyen de contrôle (3b) pour contrôler l'information reproduite par ledit moyen de reproduction de disque (2).

5. Appareil d'évaluation de disques selon l'une quelconque des revendications précédentes, dans lequel ledit disque est l'un quelconque d'un disque mère en verre obtenu après développement, une matrice et un disque final.

6. Procédé d'évaluation de disques comportant les étapes consistant à :
commander les opérations d'un moyen de reproduction de bande maîtresse (1) et d'un moyen de reproduction de disque (2) de façon synchrone en conformité avec une information temporelle reproduite depuis à la fois une bande maîtresse et un disque ayant les mêmes signaux enregistrés sur ceux-ci ; et simultanément comparer l'information sur ledit disque à l'information sur ladite bande maîtresse.

7. Procédé d'évaluation de disques selon la revendication 6, dans lequel l'information temporelle enregistrée sur ledit disque et reproduite depuis celui-ci par ledit moyen de reproduction de disque (2) est convertie selon le même format de code que celui d'information temporelle enregistrée sur ladite bande maîtresse, de sorte que les opérations dudit moyen de reproduction de bande maîtresse (1) et dudit moyen de reproduction de disque (2) sont commandées de façon synchrone.
